(19) Europäisches Patentamt
European Patent Office
Office européen des brevets

(11) Publication number: 0 251 726 A1

(12) # EUROPEAN PATENT APPLICATION

(21) Application number: 87305703.8

(22) Date of filing: 26.06.87

(51) Int. Cl.[4]: C 08 F 236/04
C 09 J 3/14
//(C08F263/04,212:04,228:02)

(30) Priority: 26.06.86 GB 8615662

(43) Date of publication of application:
07.01.88 Bulletin 88/01

(84) Designated Contracting States:
AT BE CH DE ES FR GB GR IT LI LU NL SE

(71) Applicant: EXXON CHEMICAL PATENTS INC.
1900 East Linden Avenue
Linden New Jersey 07036 (US)

(72) Inventor: Wouters, Guy
Avenue van Becelaere 29A (BT 12)
B-1170 Brussels (BE)

(74) Representative: Bawden, Peter Charles et al
EXXON CHEMICAL LIMITED EXXON CHEMICAL
TECHNOLOGY CENTRE PO Box 1
Abingdon Oxfordshire OX13 6BB (GB)

(54) **Novel polymers and their use in adhesives.**

(57) A neutralised sulphonated co- or terpolymer obtained by reacting at least 80% by weight of at least one conjugated diene having from 4 to 10 carbon atoms per molecule and from 0.05 to 2.5 mole % of a metal or amine neutralised olefinically unsaturated sulphonate monomer which may be used in emulsions especially in aqueous pressure sensitive adhesive formulations.

EP 0 251 726 A1

**Description**

NOVEL POLYMERS AND THEIR USE IN ADHESIVES

This invention relates to novel polymers and their use in adhesive compositions and adhesive compositions containing such polymers. The present invention relates to a certain neutralised sulphonated co- or ter-polymer which is particularly useful in pressure sensitive adhesives, especially those applied from an aqueous medium. In adhesive systems the polymers are generally used with tackifiers such as hydrocarbon resins and other components such as plasticizer oil, and/or a filler may be added to modify the rheological and physical properties of the adhesive compositions.

Several U.S. Patents have described sulphonated polymers such as sulphonated Butyl and sulphonated EPDM in adhesive applications (e.g. U.S. 3,867,247 and U.S. 3,801,531). It is important to distinguish the present invention over those and other prior arts systems. The U.S. patent 3,867,247 is directed at a sulphonated Butyl cement which is solvent based and is employed to laminate various substances.

Neutralised copolymers of unsaturated sulphonates and conjugated dienes are described in United States Patent 2,914,499 and 3,306,871, and the use of certain of such polymers in adhesives, especially hot melt adhesive systems are described in European Patent 0065603. The polymers illustrated in this European patent are all obtained by reacting at least 2.57 mole % of the unsaturated sulphonate monomer which whilst yielding polymers useful in hot melt adhesive systems leads to an undesirably large increase in stiffness of the polymer which is undesirable in use in pressure sensitive adhesives, these polymers can also have compatibility problems with hydrocarbon tackifier resin emulsions.

Pressure sensitive adhesives are, among other applications, used in the tape and label field. A pressure sensitive adhesive may be used in a number of applications such as masking tape, electrical tape and medicinal tapes for holding dressings and the like in place. The term label covers a broad range of products and includes items such as price tags in the supermarket and labels on glass or plastic containers. In the case of "labels" two types of bonding are required namely permanent and removable. Permanent bonding is required for items such as labels on glass or plastic containers when the life of the label will be relatively long. Removable bonding is desirable for items such as price tags and peelable tags.

Pressure sensitive adhesives should have a high initial tack so that the adhesive surface merely needs to be contacted and pressed to a substrate to achieve bonding. There should be little or no requirement to hold the adhesive and substrate in position for any significant time while a bond develops. Depending upon the strength of adhesion required the bonding force of the adhesive may increase with time to provide a relatively permanent bond.

The present invention therefore provides a neutralised sulphonated co- or ter-polymer obtained by reacting at least 80% by weight of at least one conjugated diene having from 4 to 10 carbon atoms per molecule and from 0.05 to 2.5 mole % of a metal or amine neutralised sulphonate monomer.

The present invention also invloves the use of such neutralised sulphonate copolymers in adhesive compositions particularly pressure sensitive adhesives applied from an aqueous medium.

The copolymers of the present invention are generally prepared by emulsion polymerisation when the conjugated diene and sulphonate containing monomer are dispersed in a water phase in the presence of an initiator which is preferably soluble in the conjugated diene phase and a suitable surfactant, wherein the temperature is sufficient to initiate polymerisation. The resultant latex is coagulated usually by the addition of an aqueous salt solution and the recovered co- or ter-polymer is washed with water and subsequently dried under vacuum at room temperature.

The copolymers formed from the free radical emulsion copolymerisation process can be generally described as having an $\bar{M}n$ of 5,000 to 200,000 more preferably 10,000 to 100,000. Typical, but non-limiting examples of the copolymers which can be formed by the free radical emulsion copolymerisation process are: butadiene/sodium styrene sulphonate copolymer, isoprene/sodium sulphonate styrene copolymer, butadiene/sodium vinly sulphonate, isoprene/sodium vinyl sulphonate copolymer. Ter-polymers with styrene, acrylonitrile, vinyl chloride unsaturated acids such as acrylic methacrylic acid, maleic, fumaric acid esters thereof as the termonomer (third monomer) with the aforementioned dienes are also contemplated provided that no more the 10 weight percent of the termonomer is combined therein.

The conjugated dienes which may be used are acyclic conjugated dienes containing from about 4 to about 10 carbon atoms per molecule, more preferably about 4 to about 6 carbon atoms. Typical examples of acyclic conjugated dienes are pieridene, 1,3-butadiene, isoprene (2-methyl, 1,3-butadiene), 2,3-dimethyl-pentadiene, 2-phenyl butadiene, chloroprene and piperidene. Typical examples of cyclic conjugated dienes are cyclopentadiene and methyl cyclopentadiene. The prefered conjugated dienes are 1,3-butadiene, isoprene and chloroprene. In the formation of the sulphonate containing copolymer, one copolymerises one of the aforementioned conjugated dienes with the sulphonate containing monomer. Sulphonate containing ter-polymers can be readily formed by copolymerising the sulphonate containing monomer with a mixture of two of the above identified conjugated dienes.

The sulphonate containing monomers should be water soluble and are monomers having olefinic unsaturation and a metal or amine sulphonate group. Preferred metal or amine neutralised sulphonate monomers is are characterised by the formula:

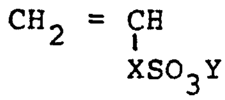

where X is $(CH_2)_n$, where n = 0, 1, 2, 3, 4 or aromatic and Y is a cation selected from Group 1A, 11A, 1B and 11B of the Periodic Table or an amine of the formula:

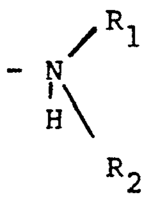

Where $R_1$ and $R_2$ are the same or different aliphatic groups of $C_1$ to $C_{12}$ or hydrogen. Particularly suitable metal cations are sodium, potassium, and zinc, and an especially preferred metal cation is sodium. Typical examples of suitable sulphonate containing monomers are:

1) $CH_2 = CHSO_3-Na+$ sodium vinyl sulphonate
2) $CH_2 = CHCH_2SO_3-Na+$ sodium allyl sulphonate
3) $CH_2 =$

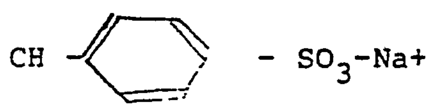

sodium styrene sulphonate

An especially preferred sulphonate containing monomer is sodium styrene sulphonate. In order to be effective in pressure sensitive adhesives the molar ratio of sulphonate containing monomer to conjugated diene in the polymerisation mixture is from 0.05 preferably 0.1 to 2.5 mole % based on the total molar amount of the monomers.

Examples of other sulphonated monomers include the Sulpho esters of - methylene carboxylic acids. Such as those desented in United States Patent 2914499.

The redox emulsion polymerisation recipe used is effective in initiating the copolymerisation of water-insoluble and water-soluble comonomers in an emulsion system. Because the peroxide initiator is dissolved in the monomer and the redox activator is dissolved in the water, the surface of the micelle/growing polymer particle is believed to be the locus of formation of initiator molecules as well as the polymerisation locus. Water phase homopolymerisation of the polar, water-soluble monomer is effectively depressed because of low primary radical concentration in the aqueous phase. However, other initiators are also contemplated for preparation of these systems.

A variety of free radical catalysts can be employed. This includes a preferential class of free radical initiators such as benzoyl peroxide, cumene hydro-peroxide, t-butyl hydro peroxide, di-isopropylene-hydroperoxide and similar systems which will be preferentially soluble in the monomer phase as opposed to the aqueous phase. There are a large number of such peroxides used in the art and those having the appropriate solubility behavior and suitable decomposition temperatures in the presence of the reducing agents are satisfactory for the purposes of this invention. Water soluble initiators may also be employed, although the characteristics of the products may be different.

The surfactants employed for this process are varied and well known in the art. The typical emulsifiers or surfactants can be employed, however, some are more effective than others in generating latexes of better stability. A preferred emulsifier is sodium lauryl sulphate.

The buffering agents employed in the polymerisation process include sodium carbonate, ammonina, sodium acetate, trisodium phosphate, etc. These buffering agents are empolyed at a concentration of 0.1 to 5 grams/100 grams water employed in the emulsion system.

Chain transfer agents can be readily employed in the polymerisation process for controlling the molecular weight of the resultant copolymer. The concentration of chain transfer agent is 0.01 to 1.0 grams/100 grams of the combined weight of the sulphonate containing monomer and the conjugated diene and other monomers that may be present.

The free radical emulsion copolymerisation of the water soluble sulphonate containing polymer and the conjugated diene yields a stable latex, wherein the resultant water insoluble copolymer is not covalently crosslinked and possesses substantial ionic crosslinking.

The resultant latex can be coagulated by the addition of an aqueous salt solution to the emulsion at a volume ratio of the aqueous salt solution to total volume of the emulsion of 10 to 0.5. The water insoluble copolymer is

recovered by filtration and subsequently washed with water and dried under vacuum conditions. Alternatively, the copolymer can be coagulated by precipitation with alcohol such as methanol.

The sulphonated co- or ter-polymers of the present invention are used in adhesive formulations especially pressure sensitive adhesives formulations where they are used with a tackifying resin. The tackifying resin may be any of the resins traditionally used in pressure sensitive adhesives especially in natural rubber and isoprene/styrene block copolymer based adhesives and include natural resins, polyterpenes and the synthetic tackifying resin such as the hydrocarbon resins having a softening point of 0 to 160°C, more preferably 50 to 140°C and most preferably 70 to 120°C. A variety of commercial tackifier resins are available. Some of these resins contain α and/or β pinene based polyterpene resins as the main ingredient while others are derived from the polymerisation of petroleum or coal distillates which consist of aliphatic dienes, mono and di-olefins and cyclic olefins having about 5 to about 6 carbon atoms per molecule. The latter type of tackifiers have primarily piperylene and/or isoprene structure.

A general but excellent description of tackifying resins derived from petroleum derivatives can be found in, for example, Encyclopedia of Polymer Science and Technology, Vol 9, Pages 853 to 860, chapter by John Findlay, published by John Wiley & Sons, NY (1968). Examples of other suitable tactifiers include emulsified resin, partially decarboxylated rosin, glyceryl esters of polymerised rosin, partially dimerised rosin, natural resins, hydrogenated wood rosin, plasticised hydrogenated resin, disproportionated resin, plasticised hydrocarbon resins aromatic petroleum resins and aliphatic/aromatic resins, terpene/phenol resins, cumarone/ idene resins, rosin esters, pentaerythritol esters and polydicylopentadiene resins; the resins may be hydrogenated.

Typical but non-limiting tradenames of these commercial tacifiers are Wingtak of Goodyear, Escorez of Exxon, Piccolyte of Hercules and Zonarex of Arizona Chemicals. Recently these and various other companies have also started marketing relatively higher softening point resins. These are generally modified aliphatic hydrocarbon resins and/or hydrogenated polycyclics. The physical appearance of these commercial tackifying resins varies, depending upon their softening point, they can be either viscous liquid or light-coloured solids at room temperature. Most often their initial colour (Gardner) is 3.0 to 7.0 and the density from 0.7 to 1.0 gm/cm$^3$ at room temperature. The acid number of these resins is usually less than 1. In general, the molecular weight of these commercial tackifying resins is not homogeneous, and the number average molecular weight $\bar{M}n$ can be from 300 to 5000.

As well-known to those familiar with the use of tackifying resins, because of their wide range compatibility, any of them can be used with sulphonated polymers in proper formulation, which will yield adhesive systems of varying physical characteristics. To cite an example in the present invention, the tackifying resins used are those based on hyydrocarbon resins.

These tackifier resins are incorporated into the adhesive composition at 25 to 700, preferably at 25 to 200 parts by weight per 100 parts by weight of neutralised sulphonated copolymer.

Many adhesives including pressure sensitive adhesives are applied to the substrate on which they are to be used from a liquid medium. In the past organic solvents have been used but the increasing concern abut health and safety hazards when using such solvents has led to an increase in the use of water based systems. The water based systems are frequently mixtures of a polymer emulsion and an emulsion of the tackifying resin optionally containing other additives such as stabilisers, antioxidants and viscosity modifiers if needed. It is in these systems that the polymers of the present invention are particularly useful when they enable adhesives with a desirably low modulus combined with high cohesive strength to be obtained. Emulsions of these polymers yielded particularly useful pressure sensitive adhesives when used in combination with a tackifier emulsion such as that which may be prepared by the process described in our European Patent 83300001.1. The adhesives may be formed by simple mixing of the emulsions.

The polymer latex and the tackifier may be blended using conventional blenders to provide a homogenous mixture. The tackifier resin may be added to the latex in an amount of from about 25 to about 700 preferably 25-200 parts by weight per hundred parts of polymer in the latex, more, preferably the tackifier resins is added to the latex in an amount from about 50 to about 150 parts by weight per 100 parts of polymer in the latex. It is preferred that the tackifier be added to the latex as an aqueous emulsion to provide the amounts of tackifier resin per amount of polymer given above.

The cohesive strength of the polymer is due to the ionic interaction of the sulphonate groups but this can limit the penetration of the tackifier resin into the polymer matrix. In order to enhance the penetration to get a good tackifying effect a volatile agent that solvates the ionic groups and temperarily reduces the ionic interaction may be included. Examples of useful volatile agents include alcohols, amines, thiols, phenols, carboxylic acids and esters, etc. that can be removed from the adhesive film by heating preferably during the removal of water from aqueous based adhesives. When used we find that amounts up to about 3 wt. % based on the adhesive emulsion are sufficient.

The adhesive compositions will generally contain other conventional additives such as the antioxidant typically used in diene rubbers for example phenols, amines etc. Irganox 2246, 565 being typical. Plasticizers may also be added.

The adhesive compositions of the present invention may be applied to a substrate and then dried using conventional substrates and procedures. The substrate used depends upon the use envisaged but it is usually relatively thin material, usually no greater than about 3.2 mm in thickness and in the manufacture of tapes and labels the substrate is a relatively thin sheet material. The sheet material may be a polymeric material which is

flexible at room temperature. The sheet material may be a homo-polymer of an ethylenically unsaturated monomer such as ethylene, propylene or vinyl chloride, or be polyester or polyamide provided it has sufficient flexibility for the desired end use. Alternatively the substrate may be made from cellulosic or reconstituted cellulosic material such as rayon. The substrate need not be a sheet material but may be composed of fibers which may be woven, or non woven as is the case in paper. Woven substrates may be made from cellulosic material, such as cotton or from fibers of any of the above mentioned polymers.

The composition is applied to the substrate using conventional coating techniques such as roller coaters, blade coaters, meyer rods or air coaters. The coated substrate is then dried usually by passing it through a heating tunnel or oven through which may be circulating hot air or the tunnel or oven may contain infra-red lamps to dry the coated substrate. The drying time will be a function of a number of factors such as the heat capacity of the substrate, the type of heating, the oven temperature, air velocities (if circulating air is used) and the rate of passage of the substrate through the heater.

The substrate should be coated with sufficient composition to provide a dry coat weight from about 16 to about 57 g/cm$^2$. Generally in the manufacture of tapes using a continuous sheet polymeric substrate a dry coat weight of about 15-30 g/cm$^2$ is used. In the manufacture of labels a dry coat weight from about 15 to 30 g/cm$^2$ is usually used. In the manufacture of masking tape a dry coat weight from about 35 to about 65 g/cm$^2$ is usually used.

After drying the coated substrate is cut to the required dimension. In the manufacture of tape the substrate is cut into strips and rolled to provide a finished product. The substrate may also be cut into shaped items to provide labels or medicinal tapes.

The present invention is illustrated by the following Example.

Several polymers were prepared containing varying amounts of sodium styrene sulphonate by charging a pressurised reactor with the following ingredients.

| | Parts by Weight |
|---|---|
| Water | 147 |
| $(NH_4)_2\ Fe(SO_4)_2.6H_2O$ | 0.011 |
| EDTA $Na_2.2H_2O$ (ethylene diamine tetra acetic acid disodium salt dihydrate) | 0.020 |
| Sodium formaldehyde sulphoxylate (SFS) | 0.1 |
| Aerosol 501 (51% active) | 6 |
| Sodium styrene sulphonate | variable |
| Isoprene | 80 |

the pH is adjusted to 10.5 with 25% ammonina solution.

After purging with nitrogen, the reactor is closed and its contents heated to 40°C under stirring.

At this stage a mixture of:

Isoprene : 20
DHP(50%) : 0.1 (diisopropylbenzene monohydroperoxide)
DDM : 0.1 (tertiary dodecyl mercaptan)
is added to start the reaction.

After 30 minutes feeds A and B are injected separately to he reactor at a constant rate over a total period of six hours (5 hours at 42 ± 2°C and then 1 hour at 50 ± 2°C).

Feed A : Isoprene : 12; DHP : 1.2
Feed B : water : 12; SFS : 0.6
0.2 DDM is added to the reactor after 2 hours reaction. After the reaction the conversion of the isoprenen exceeds 95%. The unreacted isoprene is then stripped generating isoprene-styrene sulphonate copolymer emulsion of about ca 42 wt % solids.

The polymer emulsion was then blended with an aqueous emulsion of an alipatic/aromatic resins of softening point 73°C containing 30 wt. % aromaticity derived from styrene as described in European Patent Application 85306726.6 the emulsion contained 49 wt. % solid and was prepared by the process of European Patent Application 83300001.1 using 5.5 parts of the commercially available emulsifier Atlox 3404FB to give an additive containing equal amounts of polymer and tackifying resin. The properties of the adhesive determined by coating onto "Mylar" (Registered Trade Mark) film to give a covering of about 25 grams/square metre and

the 180°C peel strength, loop tack on metal and the ball tack were measured as well as the shear on metal.

The results of the tests were as follows:

| Run No. | wt % Sodium Styrene sulphonate in feed Based on total Monomer Content | Peel strength* ($g. cm^{-1}$) PTSC-1 | Loop tack* ($g. cm^{-1}$) | Polymer tack* (g) | Ball tack* (cm) | Shear* (Hrs) |
|---|---|---|---|---|---|---|
| 1 | 0 | 240 | 100 | 350 | 9 | 0.6 |
| 2 | 0.2 | 460 | 130 | 300 | 4 | 2.5 |
| 3 | 0.5 | 420 | 360 | 800 | 3 | 11.3 |
| 4 | 1 | 360 | 360 | 300 | 12 | >100 |
| 5 | 1.5 | 380 | 340 | 700 | 18 | >100 |
| 6 | 2 | 360 | 290 | 700 | 12 | >100 |
| 7 | 2.57 | 240 | 60 | 250 | >30 | >100 |

* Test Methods of the Pressure Sensitive Tape Council Seventh Edition

The adhesive film obtained from Run 7 was slightly hazy due to partial incompatibility of the resin and the polymer

Example 2

The hydrocarbon resin emulsion used in Example 1 was replaced with a commercial resin ester emulsion Elatex KA 12 from AKzo into the following result:

| Mole % Sodium Styrene Sulphonate in Feed | Peel Strength | Loop Tack | Polymer Tack | Ball Tack | Shear |
|---|---|---|---|---|---|
| 1 | 220 | 90 | 600 | 11 | 11 |
| 2 | 240 | 180 | 500 | 8 | 25 |

**Claims**

1. A neutralised sulphonated co- or ter-polymer obtained by reacting at least 80% by weight of at least one conjugated diene having from 4 to 10 carbon atoms per molecule and from 0.05 to 2.5 mole % of a metal or amine neutralised olefinically unsaturated sulphonate monomer.

2. A neutralised sulphonated co- or terpolymer in which the neutralised olefinically unsatyurated sulphonate monomer is of the formula:

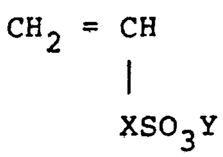

where X is $(CH_2)_n$, where n = 0, 1, 2, 3, 4 or aromatic and Y is a cation selected from Groups 1A, 11A, 1B and 11B of the Periodic or an amine of the formula:

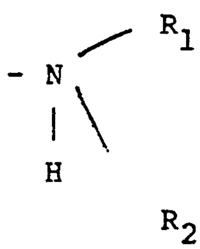

where $R_1$ and $R_2$ are the the same or different aliphatic groups of $C_1$ to $C_{12}$ or hydrogen.

3. A co- or terpolymer according to claim 1 or claim 2 in which the olefinically unsaturated sulphonates monomer is sodium vinyl sulphonate, sodium allyl sulphonate or sodium styrene sulphonate.

4. A co- or terpolymer according to any of the preceding claims in which olefinic is isoprene.

5. An aqueous emu lsion of a co- or ter polymer according to any of the preceding claims.

6. An aqueous emulsion according to claim 5 containing from 30 to 70 wt. % solids.

7. The use of the sulphonated co- or ter-polymers of any of claims 1 to 4 in adhesive formulations.

8. The use according to claim 7 in which the adhesive is a pressure sensitive adhesive formulation containing a tackifying resin.

9. An adhesive formation containing 25 to 700, preferably at 25 to 200 parts by weight a tackifier resin per 100 parts by weight of neutralised sulphonated copolymer according to any of claims 1 to 4.

10. An adhesive formulation according to claim 9 which is an aqueous based adhesive.

11. A pressure sensitive adhesive tape coated with an adhesive formulation according to claim 9 or claim 10.

European Patent Office

# EUROPEAN SEARCH REPORT

Application number

EP 87 30 5703

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.4) |
| X | US-A-4 387 172 (P.K. AGARWAL et al.)<br>* Claims 1-5; column 4, line 34 *<br>--- | 1-11 | C 08 F 236/04<br>C 09 J 3/14 //<br>(C 08 F 236/04<br>C 08 F 212:04<br>C 08 F 228:02 ) |
| X | US-A-4 483 960 (P.K. AGARWAL et al.)<br>* Claims 1,8 *<br>--- | 1-11 | |
| X | EP-A-0 034 020 (EXXON)<br>* Claim 1; page 6, line 33 *<br>----- | 1-6 | |
| | | | TECHNICAL FIELDS SEARCHED (Int. Cl.4) |
| | | | C 08 F |

The present search report has been drawn up for all claims

| Place of search | Date of completion of the search | Examiner |
|---|---|---|
| THE HAGUE | 07-09-1987 | VAN HUMBEECK F.W.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document